# EUROPÄISCHE PATENTSCHRIFT

(11) **EP 3 293 095 B1**
(45) Veröffentlichungstag und Bekanntmachung des Hinweises auf die Patenterteilung: **30.09.2020**
(21) Anmeldenummer: 17187292.2
(22) Anmeldetag: 22.08.2017
(51) Int. Cl.: B62D 29/00, B62D 25/04

(54) **B-SÄULE FÜR EINE KRAFTFAHRZEUGKAROSSERIE SOWIE KRAFTFAHRZEUGKAROSSERIE MIT EINER SOLCHEN B-SÄULE**
B-PILLAR FOR THE BODY OF A MOTOR VEHICLE AND VEHICLE BODY COMPRISING SUCH A B-PILLAR
PIED MILIEU DE CARROSSERIE DE VÉHICULE AINSI QUE CARROSSERIE DE VÉHICULE POURVUE D'UN TEL PIED MILIEU

(30) Priorität: 07.09.2016 DE 102016116787
(43) Veröffentlichungstag der Anmeldung: 14.03.2018
(73) Patentinhaber: Muhr und Bender KG, 57439 Attendorn (DE)
(72) Erfinder: Steffens, Hubertus, 57489 Drolshagen (DE); Spielvogel, Bernhard, 5271 Moosbach (AT)
(74) Vertreter: Neumann Müller Oberwalleney & Partner Patentanwälte

(56) Entgegenhaltungen:
- DE-A1-102007 053 353
- DE-A1-102012 023 653
- DE-A1-102014 003 378
- DE-A1-102015 218 152
- FR-A1- 3 030 356

## Beschreibung

Die vorliegende Erfindung betrifft eine B-Säule für eine Kraftfahrzeugkarosserie, umfassend ein Blechformteil mit einem Kopfabschnitt, einem Zentralabschnitt und einem Fußabschnitt, sowie mit einer Innenseite und einer Außenseite, wobei der Kopfabschnitt an der Innenseite einen Anbindungsbereich zur Anbindung der B-Säule an einen Dachbereich aufweist, wobei der Fußabschnitt zur Anbindung der B-Säule an einem Schwellerbereich ausgestaltet ist, wobei der Zentralabschnitt sich zwischen dem Kopfabschnitt und dem Fußabschnitt erstreckt und eine Längsrichtung der B-Säule definiert, wobei das Blechformteil zumindest im Zentralabschnitt ein Hutprofil derart aufweist, dass auf der Innenseite ein Hohlraum zur Aufnahme von Fahrzeuganbauteilen gebildet ist; und ein Faserverbundteil mit einem oberen Abschnitt, einem mittleren Abschnitt und einem unteren Abschnitt, wobei der untere Abschnitt innerhalb des Zentralabschnitts des Blechformteils endet. Des Weiteren betrifft die vorliegende Erfindung eine Kraftfahrzeugkarosserie mit einer solchen B-Säule.

Es ist bekannt, B-Säulen in Hybridbauweise herzustellen, bei der metallische Formteile der B-Säule mit einem faserverstärkten Verbundwerkstoff bereichsweise verstärkt werden, um leichtere B-Säulen mit verbessertem Crashverhalten bereitzustellen. Die DE 10 2006 027 546 A1 zeigt eine mehrschalige B-Säule aus Blechformteilen, die im mittleren Bereich der B-Säule zum Schutz der Insassen bei einem Seitenaufprall mit einem Aufprallschutzverstärkungsteil verstärkt ist. Das Verstärkungsteil besteht aus einem Faser-Kunststoff-Verbund. Aus der DE 10 2012 023 653 A1 ist eine B-Säule mit einem inneren Schließteil aus einem flachen Blechzuschnitt bekannt, auf das von außen ein Leichtbauteil aus faserverstärktem Kunststoff aufgesetzt ist. Das Faserverbundteil erstreckt sich über die gesamte Länge des inneren Schließteils.

Der vorliegenden Erfindung liegt die Aufgabe zugrunde, eine gewichtsreduzierte B-Säule bereitzustellen, die eine hohe Steifigkeit aufweist und anspruchsvolle Crash-Lastfälle erfüllt. Die Aufgabe besteht ferner darin, eine gewichtsreduzierte Kraftfahrzeugkarosserie bereitzustellen, die eine hohe Steifigkeit aufweist und anspruchsvolle Crash-Lastfälle erfüllt.

Eine Lösung besteht in einer B-Säule der eingangs genannten Art, bei der das Faserverbundteil von außen auf die Außenseite des Blechformteils aufgesetzt ist, und wobei der Kopfabschnitt des Blechformteils an der Außenseite einen Stützbereich aufweist, wobei der obere Abschnitt des Faserverbundteils einen Anlagebereich aufweist, der den Stützbereich seitlich umgreift und gegen diesen in Längsrichtung der B-Säule abgestützt ist.

Der Erfindung liegt die Überlegung zugrunde, dass die B-Säule eine tragende Fahrzeugsäule ist, die im eingebauten Zustand einen Dachbereich der Kraftfahrzeugkarosserie mit einem Schwellerbereich der Kraftfahrzeugkarosserie verbindet. Wenn auf den "eingebauten Zustand" Bezug genommen wird, ist derjenige Zustand gemeint, bei dem die B-Säule in der Kraftfahrzeugkarosserie zwischen dem Dachbereich und dem Schwellerbereich eingesetzt ist. Begriffe wie "unten", "oben" oder "Mitte" stellen räumliche Angaben in Bezug auf die B-Säule im eingebauten Zustand an der Kraftfahrzeugkarosserie dar.

Erfindungsgemäß ist vorgesehen, dass das Faserverbundteil als ein die Karosserie tragendes Strukturelement in der B-Säule integriert ist. Hierzu stützt sich das Faserverbundteil am Kopfabschnitt des Blechformteils ab, wobei sich im eingebauten Zustand der obere Abschnitt des Faserverbundteiles axial, das heißt in Längsrichtung der B-Säule, mit dem Dachbereich, insbesondere mit einem sich in Fahrtrichtung erstreckenden Dachholm überdeckt. Dadurch ergibt sich ein Kraftfluss von dem Dachbereich über das Faserverbundteil in den Schwellerbereich. Im eingebauten Zustand wird das tragende Faserverbundteil in der Längsrichtung auf Druck und Zug belastet und stützt den Dachbereich gegenüber dem Schwellerbereich ab. Aufgrund der höheren Festigkeit des Faserverbundteils im Vergleich zum Blechformteil nimmt das Faserverbundteil sogar einen größeren Teil der Tragfunktion der B-Säule wahr als das Blechformteil. Denn das Verhältnis zwischen der Festigkeit des Faserverbundteiles und des Blechformteils liegt je nach Auslegung des Faser-Matrix-Gefüges bei etwa 5:1. Im unteren Abschnitt endet das Faserverbundteil oberhalb des Fußabschnittes. Das Faserverbundteil hat im Vergleich zum Blechformteil eine niedrige Bruchdehnung, weshalb das Faserverbundteil bei Lasteintrag zwar bis zu einem gewissen Grad elastisch nachgibt, darüber allerdings bricht. Um aber im Übergangsbereich der B-Säule zum Schwellerbereich, respektive dem Türeinstiegsbereich einen Deformationsbereich bereitzustellen, der sich im Crashfall plastisch verformen kann, ist der Fußbereich der B-Säule nur durch das Blechformteil gebildet. Somit werden im eingebauten Zustand die auf das Faserverbundteil einwirkenden Kräfte im unteren Bereich der B-Säule lediglich über den Fußbereich des Blechformteils in den Schwellerbereich eingebracht, sodass sich im unteren Bereich der B-Säule ein Kraftfluss von dem Faserverbundteil über den Fußabschnitt des Blechformteils in den Schwellerbereich ergibt. Des Weiteren ist das Faserverbundteil von außen auf die Außenseite des Blechformteils aufgesetzt. Damit ist das Faserverbundteil auf der Druckseite der B-Säule angeordnet, sodass das Faserverbundteil bei einem Seitenaufprall gegen das Blechformteil gedrückt wird. Durch die Einbindung des Faserverbundteils als tragendes Strukturelement auf der Druckseite der B-Säule kann sich das Faserverbundteil bei einem Seitenaufprall aufstellen, respektive aufrichten. Wenn bei einem Crashfall die einwirkende Crashenergie unterhalb der Bruchkraft des Faserverbundteiles bleibt, bewegt sich das Faserverbundteil nach Entlastung wieder zurück in die ursprüngliche Einbausituation. Auf diese Weise kann das Faserverbundteil elastisch federn, quasi atmen, und die aufgenommene Crashenergie wieder abgeben. Im Ergebnis wird durch die erfindungsgemäße B-Säule eine gewichtsreduzierte und hochbelastbare Fahrzeugsäule mit genau zwei tragenden Strukturelementen, nämlich dem Blechformteil und dem Faserverbundteil, bereitgestellt, bei der im eingebauten Zustand sowohl das Blechformteil als auch das Faserverbundteil als tragende Strukturelemente der Kraftfahrzeugkarosserie in das Fahrzeug-Gesamtsystem integriert sind.

Gemäß einem Aspekt der vorliegenden Erfindung ist der Stützbereich des Blechformteils keilförmig ausgebildet. Der Anlagebereich des Faserverbundteiles kann entsprechend nach oben hin aufgeweitet, insbesondere fächerartig aufgeweitet ausgebildet sein. Dadurch wird eine besonders stabile axiale Abstützung des Faserverbundteils am Kopfabschnitt des Blechformteils bereitgestellt. Das Faserverbundteil kann im Anlagebereich formschlüssig auf den Stützbereich des Blechformteils aufgeschoben, beziehungsweise gelegt sein.

Weiterhin kann das Faserverbundteil im Anlagebereich mittels Verbindungsmitteln mit dem Stützbereich des Blechformteils verbunden sein. Dadurch wird die Verbindung zwischen dem Faserverbundteil und dem Blechformteil im Anlagebereich zusätzlich verstärkt. Die Verbindungsmittel können beispielsweise Niete sein. Darüber hinaus kann das Faserverbundteil im Anlagebereich mit dem Blechformteil stoffschlüssig verbunden, insbesondere verklebt sein.

Des Weiteren kann das Faserverbundteil zumindest im mittleren Abschnitt ein schalenförmiges Profil aufweisen, das im Querschnitt zumindest abschnittsweise U-förmig ausgebildet sein kann. Weiterhin kann das Faserverbundteil das zumindest im Zentralabschnitt hut-profilförmige Blechformteil seitlich umgreifen. Dadurch wird die Stabilität der B-Säule erhöht. Das Faserverbundteil kann zumindest im mittleren Abschnitt formschlüssig an das Blechformteil angelegt sein.

Insbesondere kann das Faserverbundteil mit dem Zentralabschnitt des Blechformteils durch Befestigungsmittel, insbesondere Schraubverbindungen verbunden sein, die zum Anbringen von an der B-Säule gehaltenen Fahrzeuganbauteilen ausgebildet sind. Damit können die Befestigungsmittel doppelt verwendet werden, um nicht nur das Faserverbundteil mit dem Blechformteil zu verbinden, sondern auch die Fahrzeuganbauteile, wie beispielsweise ein Schließkeil für die Vordertüre, ein Türschloss, ein Türscharnier, ein hinterer Türfeststeller, eine Aufnahme einer Gurtrolle oder eines Gurtstraffers, an der B-Säule zu befestigen.

Weiterhin kann das Faserverbundteil metallische Verbindungselemente aufweisen, die teilweise im Faserverbund eingebunden sind und mit freien Endbereichen aus dem Faserverbund herausragen. An den freien Endbereichen kann das Faserverbundteil mit dem Blechformteil stoffschlüssig verbunden, insbesondere verschweißt, sein beispielsweise mittels Punkt- oder Laserschweißverfahren. Die freien Endbereiche können aus dem Faserverbund des Faserverbundteiles in Längs- und Querrichtung vorstehen. Weiterhin können die freien Endbereiche der Verbindungselemente aus einer Vielzahl schmaler, stegartiger Füße oder aus einem oder mehreren sich in der Längsrichtung erstreckenden Flansche gebildet sein.

Des Weiteren kann das Faserverbundteil zumindest einen im Faserverbund eingebundenen Verstärkungseinleger aufweisen. Dadurch kann das Crash-Verhalten des Faserverbundteiles angepasst werden. Der Verstärkungseinleger kann ein metallisches Blechteil sein, das insbesondere durch Einflechten von Fasersträngen formschlüssig, tragend in die Gelegestruktur der umliegenden Fasermateriallagen des Faserverbundteiles eingebunden sein kann. Dabei kann der Verstärkungseinleger aufgrund seiner Oberflächenbeschaffenheit, respektive Rauigkeit und/oder eines Oberflächen-Beschichtungskonzeptes zu einer die Fasern des Faserverbundmaterials umgebenden Matrix tragfähig eingebunden sein. Als Matrixsystem eignet sich insbesondere eine Harzmatrix. Der eingebundene Verstärkungseinleger kann aus einem kalt- oder warmumgeformten hoch- oder höchstfestem Stahl hergestellt sein. Weiterhin kann der Verstärkungseinleger in der Längsrichtung und/oder einer Querrichtung, die quer, insbesondere senkrecht zur Längsrichtung der B-Säule verläuft, eine variable Dicke, respektive Wandstärke aufweisen. Der Verstärkungseinleger kann die Druckspannungen aufgrund einer Crash-Energie innerhalb des Faserverbundteiles optimal aufnehmen und somit die Eigenschaften des Faserverbundteiles in Bezug auf Zugfestigkeit in Wirkung bringen.

Insbesondere kann das Faserverbundteil zumindest im unteren Abschnitt formschlüssig am Blechformteil derart anliegen, dass das Faserverbundteil gegen das Blechformteil in Längsrichtung abgestützt ist. Auf diese Weise wird das Tragverhalten des Faserverbundteiles als tragendes Strukturelement der B-Säule verbessert.

Weiterhin kann das Blechformteil im oberen Bereich des Fußabschnittes und/oder im unteren Endbereich des Zentralabschnittes einen gehärteten hochfesten Abschnitt aufweisen. Aufgrund der tragenden Einbindung des Faserverbundteils kann sich das Faserverbundteil, das bei einem Seitenaufprall in Richtung des Blechformteils gedrückt wird, aufstellen und sich mit seinem unteren Längsende in das Blechformteil hineindrücken. Dies kann zum Einknicken des Blechformteils führen. Durch den hochfesten Abschnitt wird das Eindrücken des Blechformteils durch das untere Längsende des Faserverbundteiles verhindert. Der gehärtete hochfeste Abschnitt des Blechformteils erstreckt sich jedoch nicht über den Türeinstiegsbereich des Fußabschnitts, der vielmehr als weiche Deformationszone ausgebildet sein kann, um sich beim Crashfall plastisch verformen zu können.

Das Blechformteil kann vorzugsweise aus einem Stahlblech hergestellt sein. Als Stahlwerkstoff kann beispielsweise Borstahl, insbesondere 22MnB5, verwendet werden, wobei jeder andere härtbare Stahlwerkstoff ebenso denkbar ist. Das Blechformteil kann ebenso ein Leichtbauteil aus Magnesium oder Aluminium sein. Es kann jeweils in seinen Teilbereichen unterschiedlich gewalzte Blechstärken aufweisen, verschiedenartige Stahl- und/oder Aluminiumlegierungen, Oberflächenbeschichtungs- und Vergütungszustände innerhalb des Blechformteils aufweisen. Als Verbindungsverfahren zum Karosserierohbau beziehungsweise den in der Karosserie angrenzenden Bauteilen kann insbesondere Bördel-, Punktschweiß- und/oder Laserschweißverfahren eingesetzt werden.

Überraschenderweise hat sich gezeigt, dass die B-Säule durch Kombination eines warmumgeformten und zumindest teilweise gehärteten Blechformteils mit dem Faserverbundteil eine ausreichend hohe Steifigkeit aufweist, um selbst anspruchsvolle Crash-Lastfälle zu erfüllen. Die B-Säule weist insgesamt sogar eine federartige und im elastischen Bereich deformierbare Grundform auf. Somit kann auf die als besonders belastbar geltenden Kaltformteile gänzlich verzichtet werden kann. Prinzipiell könnte das Blechformteil aber auch ein Kaltformteil sein. Durch die tragende Einbindung des Faserverbundteiles kann jedoch das warmumgeformte und zumindest teilweise gehärtete Blechformteil dünnwandig ausgebildet sein. Vorzugsweise ist das Blechformteil aus einem Tailor Rolled Blank oder Tailor Welded Blank hergestellt und weist somit in der Länge eine variable Blechdicke auf. Somit kann das Blechformteil gezielt lokal eingestellt werden. Weniger stark beanspruchte Zonen können eine geringere Blechdicke als stark beanspruchte Zonen des Blechformteils aufweisen. Beispielsweise können die Blechdicken des Blechformteils zwischen 0,7 mm und 3 mm variieren. Insbesondere kann das Blechformteil im Kopfabschnitt eine Blechdicke von 1 mm bis 3 mm, im Zentralabschnitt eine Blechdicke von 0,7 mm bis 2 mm und im Fußabschnitt eine Blechdicke von 1 mm bis 3 mm aufweisen. Weiterhin kann das Blechformteil insbesondere im Zentralabschnitt neben üblicherweise vorhandenen Aussparungen, die der Fixierung von Fahrzeuganbauteilen dienen, weitere Aussparungen zur gezielten Gewichtsreduzierung des Blechformteils aufweisen. Dabei wird die damit einhergehende Schwächung des Blechformteils bewusst hingenommen, da nicht das Blechformteil, sondern das Faserverbundteil die Hauptlast der B-Säule trägt. Das heißt mehr als die Hälfte der auf die B-Säule in der Längsrichtung wirkende Last wird durch das Faserverbundteil getragen.

Unter Warmumformung wird das Umformen von Metallen oberhalb deren Rekristallisationstemperatur verstanden. Das Warmumformen und Härten kann in einem Prozess in einem Presshärtewerkzeug durchgeführt werden. Dieser kombinierte Umform-und Härteprozess wird auch als Presshärten bezeichnet. Beispielsweise kann das Blechformteil aus einer Platine hergestellt sein, die vor dem Warmumformen auf mindestens 800 bis 850 Grad Celsius erwärmt, dann in ein Umformwerkzeug eingelegt und im warmen Zustand umgeformt und dabei durch Kontaktierung mit dem Umformwerkzeug schnell abgekühlt wird. Das Umformwerkzeug kann von innen her zwangsgekühlt werden. Das Abkühlen des Blechformteils im Umformwerkzeug kann beispielsweise innerhalb von etwa 15 Sekunden oder weniger auf beispielsweise etwa 200 Grad Celsius erfolgen. Neben der vorbeschriebenen Presshärtung kann das Blechformteil auch auf andere Weise gehärtet werden. Nach einer möglichen Ausgestaltung kann das gehärtete Blechformteil auch lokale Weichzonen aufweisen, die im Crashfall insbesondere als Soll-Deformationszonen dienen können. Die mechanischen Eigenschaften der Weichzonen können entsprechend den Anforderungen ausgelegt werden. Beispielsweise können Weichzonen, die als Versagensbereiche vorgesehen sind, eine deutlich höhere Bruchdehnung aufweisen als die Bruchdehnung des gehärteten Grundmaterials. Vorzugsweise beträgt die Bruchdehnung in den Weichzonen mehr als 10 %, insbesondere 10 % bis 15 %. Demgegenüber kann die Bruchdehnung des gehärteten Grundmaterials des unteren Formteils beispielsweise bei etwa 4 % bis 7 % liegen.

Weiterhin kann das Blechformteil beschichtet sein, insbesondere mit einer Aluminium-Silizium-Legierung oder Zink, um als Korrosionsschutz zu dienen sowie um eine Verzunderung des Bauteils während der Warmumformung zu vermeiden. Dabei kann das Blechformteil vor und/oder nach der Warmumformung beschichtet werden. Bei Beschichtung vor der Warmumformung kann zum einen ein Bandmaterial, aus dem das Blechformteil erzeugt sein kann, oder zum anderen die Platine selbst beschichtet werden. Bei Beschichtung nach der Warmumformung kann das umgeformte und mitunter bereits gehärtete Blechformteil beschichtet werden.

Das Faserverbundteil kann Kohle-, Glas- oder auch Aramidfasern oder metallische Fasern aufweisen. Die Fasern des Faserverbundwerkstoffes können in einer Harzmatrix, insbesondere einer Epoxid-Matrix, gebunden sein. Insbesondere können die Faseranteile auch aus einer Kombination der zuvor genannten Fasermöglichkeiten beliebig zusammengesetzt werden. Durch die axiale oder multiaxiale Ausrichtung der Fasern ist es zudem möglich, das Faserverbundteil an die jeweiligen Einsatzgebiete und die geforderten Crasheigenschaften anzupassen. Neben der Wahl der Fasern oder der Ausrichtung der Fasern kann das Faserverbundteil auch durch lokal unterschiedliche Wandstärken angepasst werden, indem die Anzahl an Faserlagen variiert wird. Auf diese Weise kann das Crashverhalten der B-Säule getrimmt beziehungsweise abschnittsweise variiert werden.

Das Faserverbundteil kann mittels Klebe-, Nagel-, Niet- und/oder Schraubverbindungstechnik mit dem Blechformteil verbunden sein. Zwischen dem Blechformteil und dem Faserverbundteil kann eine Sperr- beziehungsweise Entkopplungsschicht, beispielsweise aus einem Klebstoff, vorgesehen sein, um eine Kontaktkorrosion zwischen dem Faserverbundteil und dem Blechformteil zu verhindern. Um eine stabile Verbindung zwischen den beiden tragenden Strukturelementen bereitzustellen, kann das Faserverbundteil flächig mit dem Blechformteil verbunden.

Gemäß einem Aspekt der vorliegenden Erfindung kann eine Außenkante des Faserverbundteiles von einer Außenkante des Blechformteils derart beabstandet ist, dass das Blechformteil zwischen der Außenkante des Faserverbundteiles und der Außenkante des Blechformteils einen einlagigen Fügeflansch der B-Säule zur Verbindung einer Türdichtung und/oder einer Fahrzeugaußenhaut und/oder einer Glasfläche mit dem Blechformteil bildet. Auf diese Weise ist das Blechformteil der alleinige Fügepartner für weitere Bauteile, die nicht zur B-Säule gehören. Somit kann beispielsweise die Fahrzeugaußenhaut mit dem einlagigen Fügeflansch des Blechformteils verschweißt werden. Das Faserverbundteil erstreckt sich nicht über den Fügeflansch. Vorzugsweise bildet das Blechformteil zwei voneinander beabstandete, jeweils radial außenliegende Fügeflansche auf, die sich in der Längsrichtung, vorzugsweise zumindest über die gesamte Länge des Zentralabschnittes, erstrecken.

Um einen möglichst breiten Fügeflansch bereitzustellen, kann das Blechformteil zwei einander gegenüberliegende Seitenwände aufweisen, wobei das Faserverbundteil auf äußeren Schultern der Seitenwände aufsitzt. Die Seitenwände grenzen radial innen an den jeweiligen Fügeflansch an.

Das Blechformteil erstreckt sich über die gesamte Länge der B-Säule. Üblicherweise weist eine B-Säule eines herkömmlichen Personenkraftwagens eine Länge von etwa 1,30 m bis 1,50 m auf. Die Länge des Kopfabschnittes, der lediglich der Anbindung des Blechformteils an den Dachbereich der Kraftfahrzeugkarosserie und der Stützung des Faserverbundteils dient, ist kleiner als oder gleich 15 % der Länge des Blechformteils. Der Kopfabschnitt kann flanschartig ausgebildet sein. Insbesondere kann der Kopfabschnitt im Längsschnitt U-förmig ausgebildet sein und den Dachbereich, insbesondere den Dachholm im eingebauten Zustand von außen umgreifen. Im Übergang zum Zentralabschnitt kann der untere Kopfabschnitt einen sich verjüngenden Abschnitt und/oder der obere Zentralabschnitt einen sich aufweitenden Abschnitt aufweisen. Die Länge des Fußabschnittes, der eine Deformationszone der B-Säule aufweist und der Anbindung an den Schwellerbereich dient, kann kleiner als oder gleich 25 % der Länge des Blechformteils sein. Der Fußabschnitt kann flanschartig ausgebildet sein und den Schwellerbereich im eingebauten Zustand von außen umgreifen. Insbesondere kann der Fußabschnitt im Längsschnitt U-förmig ausgebildet sein und im Übergang zum Zentralabschnitt einen sich verjüngenden Abschnitt aufweisen. Alternativ kann der Fußabschnitt einen Verbindungssteg aufweisen, der in eine Aussparung des Schwellerbereiches von oben eingreifen kann, um die B-Säule im eingebauten Zustand mittels Steckverbindung mit dem Schwellerbereich zu verbinden. Zwischen dem Kopfabschnitt und dem Fußabschnitt erstreckt sich der Zentralabschnitt, der zum Schutz der Insassen üblicherweise hochfest ausgelegt wird. Die Länge des Zentralabschnittes ist etwa 60 % bis 90 % der Länge des Blechformteils.

Das Faserverbundteil beginnt in der Höhe des Kopfabschnittes und endet im Zentralabschnitt des Blechformteiles. Entsprechend ist die Länge des Faserverbundteils zwischen 50 % und 90 % der Länge des Blechformteils. Am Beispiel des vorgenannten Längenbereichs des Blechformteiles zwischen 1,30 und 1,50 m kann somit das Faserverbundteil eine Länge von etwa 0,65 m bis 1,35 m aufweisen. Die Länge des Kopfabschnitts des Blechformteils kann kleiner als oder gleich 0,23 m und die Länge des Fußabschnitts des Blechformteils kann kleiner als oder gleich 0,37 m sein.

Um eine besonders leichte B-Säule mit einer geringen Anzahl an Bauteilen bereitzustellen, kann das Faserverbundteil das äußerste Formteil der B-Säule sein. Das heißt auf der von einem Fahrzeuginnenraum abgewandten Außenseite der B-Säule ist das Faserverbundteil durch keine tragenden Strukturelemente der B-Säule überdeckt. Unabhängig davon können kleinere Blechteile zur Abstützung oder Anbindung der Fahrzeuganbauteile, wie beispielsweise ein Schließkeil für die Vordertüre, ein Türschloss, ein Türscharnier oder ein hinterer Türfeststeller, an der vom Fahrzeuginnenraum abgewandten Außenseite des Faserverbundteiles angeordnet sein. Im eingebauten Zustand kann das Faserverbundteil wiederum durch eine Fahrzeugaußenhaut verdeckt sein, die üblicherweise erst nach Fertigstellung der Fahrzeugkarosserie an dieser befestigt wird. Um eine besonders leichte Fahrzeugkarosserie bereitzustellen, kann das Faserverbundteil auch im eingebauten Zustand von außen sichtbar sein. Insbesondere kann vorgesehen sein, dass das Faserverbundteil im eingebauten Zustand der B-Säule nicht oder zumindest nicht vollflächig durch die Fahrzeugaußenhaut überdeckt ist.

Weiterhin kann das Blechformteil das innerste Formteil der B-Säule sein. Das heißt auf der dem Fahrzeuginnenraum zugewandten Innenseite der B-Säule ist das Blechformteil durch keine tragenden Strukturelemente der B-Säule überdeckt. Durch die Kombination des Blechformteils mit dem Faserverbundteil kann auf ein im Stand der Technik bekanntes Schließblech, oder auch Deckel oder Innenblech genannt, zum Schließen des Blechformteiles verzichtet werden.

Eine weitere Lösung der oben genannten Aufgabe besteht in einer Kraftfahrzeugkarosserie mit der vorbeschriebenen B-Säule. Durch die erfindungsgemäße Kraftfahrzeugkarosserie ergeben sich dieselben Vorteile, wie sie im Zusammenhang mit der erfindungsgemäßen B-Säule beschrieben worden sind, sodass hier abkürzend auf obige Beschreibungen Bezug genommen wird. Dabei versteht es sich, dass alle genannten Ausgestaltungen der B-Säule auf die Kraftfahrzeugkarosserie übertragbar sind und umgekehrt. Insgesamt ist die erfindungsgemäße Kraftfahrzeugkarosserie bauteilreduziert und gewichtsreduziert, weist eine hohe Steifigkeit auf und kann anspruchsvolle Crash-Lastfälle erfüllen.

Insbesondere ist das Faserverbundteil der B-Säule in der Kraftfahrzeugkarosserie von außen sichtbar. Mit anderen Worten ist das Faserverbundteil der B-Säule nicht oder zumindest nicht vollflächig von der Fahrzeugaußenhaut überdeckt und ist, insbesondere bei geöffneter Vordertüre, zu sehen.

Bevorzugte Ausführungsbeispiele werden nachstehend anhand der Zeichnungsfiguren erläutert. Hierin zeigt:
- Figur 1: eine B-Säule gemäß einer ersten Ausführungsform in perspektivischer Ansicht;
- Figur 2: die B-Säule in Explosionsdarstellung;
- Figur 3: die B-Säule in Querschnittsansicht entlang der in Figur 1 gezeigten Schnittlinie III-III;
- Figur 4: die B-Säule in Querschnittsansicht entlang der in Figur 1 gezeigten Schnittlinie IV-IV;
- Figur 5: die B-Säule in Querschnittsansicht entlang der in Figur 1 gezeigten Schnittlinie V-V;
- Figur 6: die B-Säule in Querschnittsansicht entlang der in Figur 1 gezeigten Schnittlinie VI-VI;
- Figur 7: eine B-Säule gemäß einer zweiten Ausführungsform in Querschnittsansicht entlang der in Figur 1 gezeigten Schnittlinie VI-VI;
- Figur 8: eine B-Säule gemäß einer dritten Ausführungsform in Querschnittsansicht entlang der in Figur 1 gezeigten Schnittlinie VI-VI;
- Figur 9: einen Verstärkungseinleger der B-Säule gemäß Figur 8;
- Figur 10: eine B-Säule gemäß einer vierten Ausführungsform in Querschnittsansicht gemäß der in Figur 1 gezeigten Schnittlinie III-III;
- Figur 11: die B-Säule aus Figur 10 in Querschnittsansicht entlang der in Figur 1 gezeigten Schnittlinie XI-XI;
- Figur 12: die B-Säule aus Figur 10 in Querschnittsansicht entlang der in Figur 1 gezeigten Schnittlinie VI-VI;
- Figur 13: eine Fahrzeugkarosserie gemäß einer ersten Ausführungsform in Querschnittsansicht mit der B-Säule aus Figur 1; und
- Figur 14: eine Kraftfahrzeugkarosserie gemäß einer zweiten Ausführungsform in Querschnittsansicht mit der B-Säule aus Figur 1.

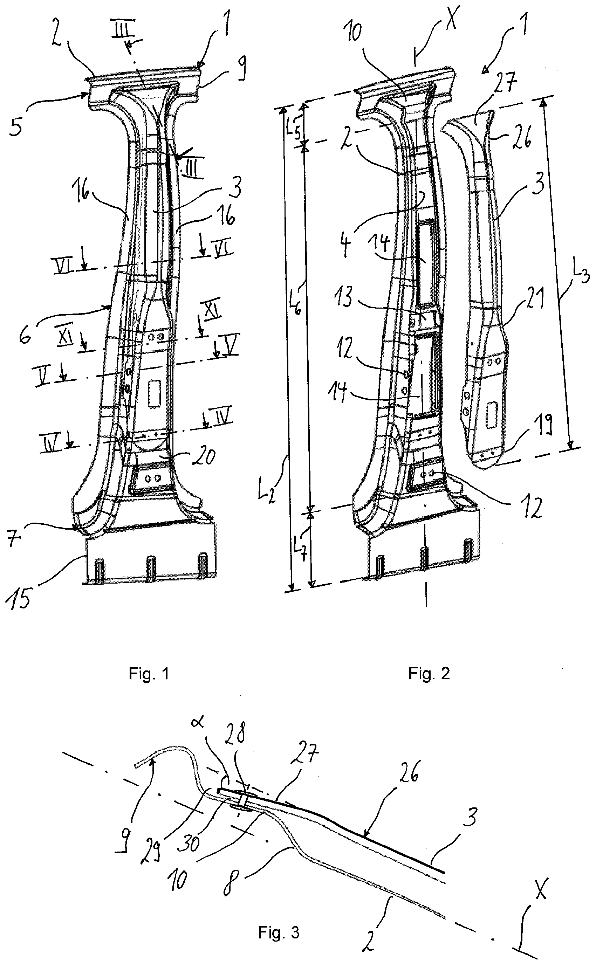

In den Figuren 1 bis 6 ist eine Fahrzeugsäule einer Kraftfahrzeugkarosserie in Form einer B-Säule 1 gemäß einer ersten Ausführungsform der vorliegenden Erfindung dargestellt. Die B-Säule hat eine längliche, hohle Grundstruktur und verbindet im eingebauten Zustand, indem die B-Säule 1 als tragendes Strukturelement in der Kraftfahrzeugkarosserie integriert ist, einen Dachbereich mit einem Schwellerbereich.

Insbesondere in Figur 2 ist erkennbar, dass die B-Säule 1 zwei tragende Strukturelemente aufweist, nämlich ein Blechformteil 2 und ein Faserverbundteil 3. Das Faserverbundteil 3 ist schalenförmig ausgebildet und von außen auf eine Außenseite 4 des schalenförmig ausgebildeten Blechformteils 2 aufgesetzt. Die Außenseite 4 ist im eingebauten Zustand der B-Säule 1 von einer nicht gezeigten Fahrgastzelle abgewandt. Somit ist das Faserverbundteil 3 auf der Druckseite der B-Säule 1 angeordnet, sodass das Faserverbundteil 3 bei einem Seitenaufprall gegen das dahinterliegende Blechformteil 2 gedrückt wird.

Konkret weist das Blechformteil 2, von oben nach unten, einen Kopfabschnitt 5, einen Zentralabschnitt 6 und einen Fußabschnitt 7 auf, wobei der Zentralabschnitt 6 eine Längsrichtung X der B-Säule 1 definiert. Bei einem herkömmlichen Personenkraftwagen kann das Blechformteil 2 beispielsweise eine Länge von etwa 1,30 bis 1,50 m aufweisen. In den Figuren 1 und 2 ist erkennbar, dass die Länge L₅ des Kopfabschnittes 5 hier kleiner als 15 % der Länge L₂ des Blechformteils 2 ist und etwa 12 % der Länge L₂ des Blechformteils 2 entspricht. Die Länge L₇ des Fußabschnittes 7 ist hier kleiner als 25 % der Länge L₂ des Blechformteils 2 und entspricht etwa 18 % der Länge L₂ des Blechformteils 2. Die Länge L₆ des Zentralabschnittes 6 ist somit etwa 70 % der Länge L₂ des Blechformteils 2.

Der Kopfabschnitt 5 verbindet im eingebauten Zustand den Dachbereich, insbesondere einen Dachholm mit der B-Säule 1, wobei an einer, der Fahrgastzelle zugewandten, Innenseite 8 der Blechformteils 2 ein oberer Anbindungsbereich 9 ausgebildet ist. Insbesondere in Figur 3 ist erkennbar, dass der obere Anbindungsbereich 9 flanschartig mit einem im Querschnitt etwa u-förmigen Profil gestaltet ist, um im eingebauten Zustand den Dachholm von außen zu umgreifen. In Höhe des oberen Anbindungsbereiches 9 weist das Blechformteil 3 an der Außenseite 4 des Kopfabschnittes 5 einen Stützbereich 10 auf, über das sich das Faserverbundteil 3 am Dachbereich, insbesondere dem Dachholm abstützen kann. Der Stützbereich 10 ist keilförmig ausgebildet und weitet sich ausgehend von einem unteren verjüngten Abschnitt nach oben hin auf.

Unterhalb des Kopfabschnittes 5 schließt sich der Zentralabschnitt 6 des Blechformteils 2 an. Zumindest entlang des Zentralabschnittes 6 weist das Blechformteil 2 ein Hutprofil derart auf, dass auf der Innenseite 8 ein Hohlraum 11 zur Aufnahme von nicht näher gezeigten Fahrzeuganbauteilen, wie beispielsweise eine Aufnahme oder eine Anbindungsstelle für ein Schließkeil für die Vordertüre, ein Türschloss, ein Türscharnier, ein hinterer Türfeststeller, eine Gurtrolle oder ein Gurtstraffer, gebildet ist. Weiterhin weist das Blechformteil 2 mehrere Durchgangsöffnungen 12 zur Fixierung der Fahrzeuganbauteile auf. Zudem sind in einem mittleren Schenkel 13 des hut-profilförmigen Zentralabschnittes 6 großflächige Aussparungen 14 eingebracht, um das Gewicht des Blechformteils 2 gezielt zu reduzieren. Unter großflächigen Aussparungen 14 wird dabei verstanden, dass sich die Gesamtfläche der Aussparungen 14 über mindestens 10 %, vorzugsweise zwischen 20 % und 80 %, insbesondere zwischen 25 % bis 50 % der Fläche des mittleren Schenkels 13 des Blechformteils 2 erstreckt.

Am unteren Ende des Zentralabschnittes 6 schließt sich der Fußabschnitt 7 des Blechformteils 2 an, der zur Anbindung der B-Säule 1 an den Schwellerbereich dient. Der Fußabschnitt 7 weist einen im Querschnitt etwa u-förmigen unteren Anbindungsbereich 15 auf, der im eingebauten Zustand den Schwellerbereich von außen umgreift.

Über die drei Abschnitte, nämlich Kopfabschnitt 5, Zentralabschnitt 6 und Fußabschnitt 7, hinweg erstrecken sich zwei radial außenliegende Fügeflansche 16, die einlagige Flanschabschnitte der B-Säule 1 bilden. Konkret sind Außenkanten 17 des Faserverbundteiles 3 von Außenkanten 18 des Blechformteils 2 derart beabstandet, dass das Blechformteil 2 zwischen den Außenkanten 17 des Faserverbundteiles 3 und den Außenkanten 18 des Blechformteiles 2 jeweils den einlagigen Fügeflansch 16 der B-Säule 1 bildet. Das heißt die durch das Blechformteil 2 gebildeten einlagigen Fügeflansche 16 sind durch das Faserverbundteil 3 nicht überdeckt. Somit können weitere metallische Fahrzeugkomponenten, wie eine Fahrzeugaußenhaut 38, mit dem Fügeflansch 16 verschweißt werden. Ebenso kann/können eine Türdichtung auf den Fügeflansch 16 gesteckt werden und/oder eine Glasfläche mit diesem verklebt werden.

Das Blechformteil 2 ist hier ein warmumgeformtes und zumindest abschnittsweise gehärtetes Formteil, das beispielsweise aus einem 22MnB5 Stahlblech hergestellt und mit einer Aluminium-Silizium-Beschichtung versehen sein kann. Das Blechformteil 2 weist in Längsrichtung X unterschiedliche Blechdicken auf, wobei die Blechdicke entsprechend den kundenspezifisch geforderten Crashzonen angepasst sein kann.

Zur hochfesten Auslegung des vor allem zum Schutz der Insassen relevanten Mittelteils der B-Säule 1 überdeckt das Faserverbundteil 3 den größten Teil des Zentralabschnittes 6 des Blechformteils 2. In den Figuren 1 und 2 ist erkennbar, dass die Länge L₃ des Faserverbundteiles 3 zwischen 50 % und 90 %, hier etwa 75 % der Länge L₂ des Blechformteils 2 ist. Dabei erstreckt sich das Faserverbundteil 3 über den Zentralabschnitt 6 und den Kopfabschnitt 5 des Blechformteils.

Konkret endet ein unterer Abschnitt 19 des Faserverbundteils 3 innerhalb des Zentralabschnitts 6. Somit sind das Faserverbundteil 3 und der Fußabschnitt 7 des Blechformteiles 2 axial voneinander beabstandet, das heißt das Faserverbundteil 3 überlappt den Fußabschnitt 7 des Blechformteiles 2 nicht, sodass der Übergang der B-Säule 1 zum Schwellerbereich nur durch die Materialeigenschaften des Blechformteiles 2 im Fußabschnitt 7 bestimmt ist.

Insbesondere in den Figuren 1 und 2 ist weiterhin erkennbar, dass der untere Abschnitt 19 des Faserverbundteiles 3 im Querschnitt gerade und in Draufsicht als Halbkreis ausgebildet ist. Zudem ist der untere Abschnitt 19 des Faserverbundteiles 3 formschlüssig am unteren Zentralabschnitt 6 des Blechformteils 2 angelegt und in Längsrichtung X abgestützt. Um im Crash-Fall zu verhindern, dass sich der untere Abschnitt 19 des Faserverbundteiles 3 in das Blechformteil 2 drücken kann, weist das Blechformteil 2 im unteren Zentralabschnitt 6 einen gehärteten hochfesten Abschnitt 20 auf.

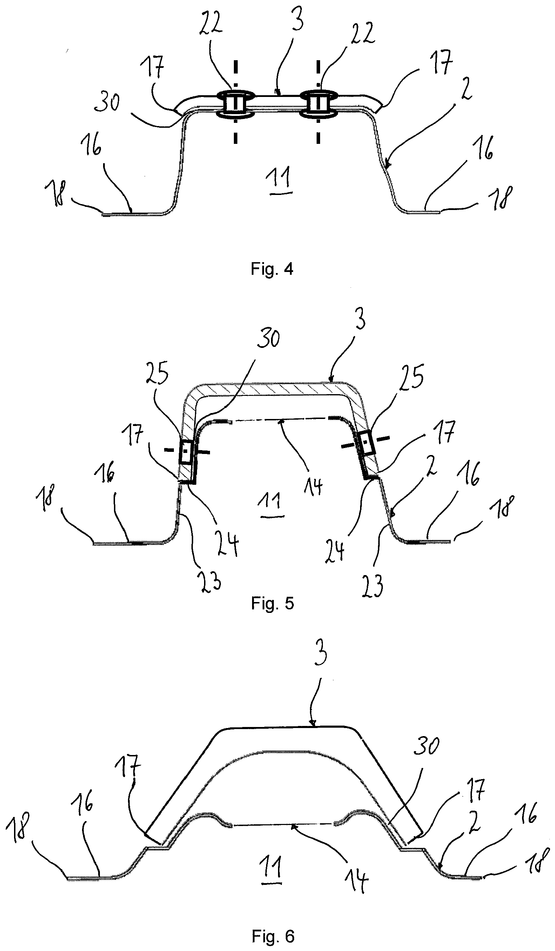

Im Übergangsbereich vom unteren Abschnitt 19 und einem angrenzenden mittleren Abschnitt 21 ist das Faserverbundteil 3 mit dem Blechformteil 2 mittels der in Figur 4 gezeigten Niete 22 verbunden. Der ausgehend von dem unteren Abschnitt 19 des Faserverbundteiles 3 sich in Längsrichtung X nach oben erstreckende mittlere Abschnitt 21 weist ein u-förmiges Profil auf, sodass das Faserverbundteil 3 das Hutprofil des Blechformteils 2 im Zentralabschnitt 6 seitlich umgreift, respektive partiell überlappt. In Figur 5 ist erkennbar, dass das Blechformteil 2 im Zentralabschnitt 6 zwei einander gegenüberliegende Seitenwände 23 aufweist, die radial innen an den jeweiligen Fügeflansch 16 angrenzen. Die Seitenwände 23 weisen hier beispielhaft jeweils eine äußere Schulter 24 auf, auf denen das Faserverbundteil 3 aufsitzt. Im Bereich der Anlagefläche sind das Faserverbundteil 3 und das Blechformteil 2 mittels Befestigungsmittel 25, die zum Anbringen von an der B-Säule 1 gehaltenen Fahrzeuganbauteilen ausgebildet sind, verbunden.

Um das Faserverbundteil 3 als tragendes Strukturelement der B-Säule 1 zu integrieren, stützt sich das Faserverbundteil 3 in einem oberen Abschnitt 26 am Kopfabschnitt 5 des Blechformteils 2 ab. Konkret weist das Faserverbundteil 3 im oberen Abschnitt 26 einen nach oben hin aufgeweitet ausgebildeten Anlagebereich 27 auf, der den Stützbereich 10 des Blechformteils 2 seitlich umgreift und gegen diesen in Längsrichtung X der B-Säule 1 abgestützt ist. Weiterhin ist das Faserverbundteil 3 im Anlagebereich 27 mittels Verbindungsmittel, beispielsweise Niete 28 mit dem Stützbereich 10 des Blechformteils 2 verbunden. Insbesondere in der Figur 3 ist erkennbar, dass der obere Abschnitt 26 des Faserverbundteiles 3 zudem mit einem Winkel α von etwa 10° leicht nach innen, das heißt in Richtung der Fahrgastzelle, angestellt ist. Dabei ist das obere Ende des Faserverbundteiles 3 unter Bildung eines Spaltes 29 von der Außenseite 4 des Blechformteils 2 im Bereich des flanschartig gebogenen oberen Anbindungsbereiches 9 beabstandet. Im eingebauten Zustand stützt sich somit das Faserverbundteil 3 im Anlagebereich 27 über den Stützbereich 10 des Blechformteils 2 am Dachholm ab. Weiterhin ist der untere Abschnitt 19 formschlüssig am Blechformteil 2 angelegt, sodass sich das Faserverbundteil 3 auch über den Zentralabschnitt 6 des Blechformteils 2 in Längsrichtung X abstützt.

Um die Stabilität und das Crash-Verhalten der B-Säule 1 weiter zu optimieren, beziehungsweise anzupassen, kann das Faserverbundteil 3 im mittleren Abschnitt 21 und/oder im oberen Abschnitt 26 und/oder im unteren Abschnitt 19 mit dem Blechformteil 2 mittels Klebe-, Niet-, Nagel- und/oder Schraub-Verbindungstechnik verbunden sein.

Das Faserverbundteil 3 kann Kohle-, Glas- oder auch Basaltfasern oder metallische Fasern aufweisen. Die Fasern des Faserverbundwerkstoffes können in einer Harzmatrix, insbesondere einer Epoxid-Matrix, gebunden sein. Insbesondere können die Faseranteile auch aus einer Kombination der zuvor genannten Fasermöglichkeiten beliebig zusammengesetzt werden. Durch die axiale oder multiaxiale Ausrichtung der Fasern ist es zudem möglich, das Faserverbundteil 3 an die jeweiligen Einsatzgebiete und die geforderten Crasheigenschaften anzupassen. Neben der Wahl der Fasern oder der Ausrichtung der Fasern kann das Faserverbundteil 3 auch durch lokal unterschiedliche Wandstärken angepasst werden, indem die Anzahl an Faserlagen variiert wird. Auf diese Weise kann das Crashverhalten der B-Säule getrimmt beziehungsweise abschnittsweise variiert werden. Um eine Kontaktkorrosion zwischen dem Faserverbundteil 3 und dem Blechformteil 2 zu verhindern, kann zwischen den beiden Strukturelementen 2, 3 eine Sperrschicht beziehungsweise Entkopplungsschicht 30, beispielsweise aus einem Klebstoff, vorgesehen sein.

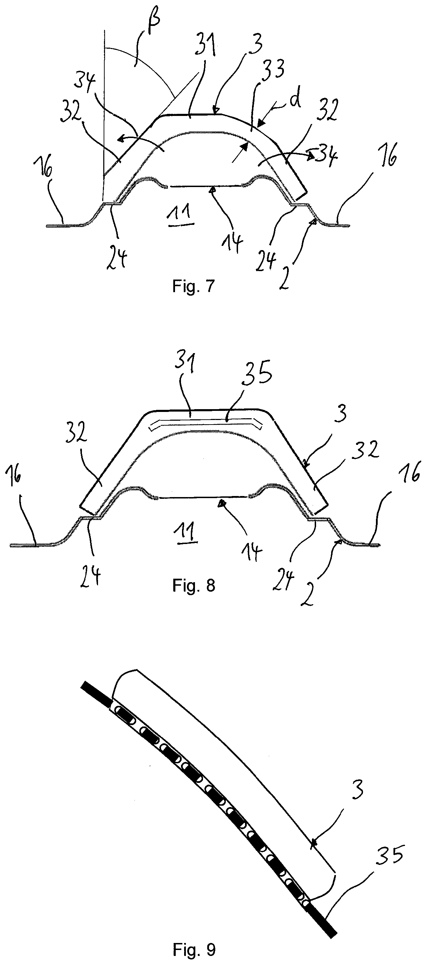

Durch die Einbindung des Faserverbundteils 2 als tragendes Strukturelement auf der Druckseite der B-Säule 1 kann sich das Faserverbundteil 2 bei einem Seitenaufprall aufstellen, respektive aufrichten. Um das Biegeverhalten des Faserverbundteiles 2, kurz auch "Flex" genannt, einzustellen, kann vor allem der mittlere Abschnitt 21 durch Variierung der Formgebung, der Wandstärke und der Festigkeit auf das geforderte Zielverhalten getrimmt werden. In der Figur 6 ist hierzu eine Ausgestaltung gezeigt, wobei alternative Ausgestaltungen in den Figuren 7, 8 und 12 dargestellt sind, die im Zusammenhang mit den nachfolgenden Ausführungsformen noch näher erläutert werden.

In Figur 7 ist eine alternative Ausgestaltung der B-Säule 1 in Querschnittsansicht entlang der in Figur 1 gezeigten Schnittlinie VI-VI gezeigt. Erkennbar ist, dass zur Beeinflussung des Crashverhaltens der B-Säule 1 entlang deren Kopfbereiches das Faserverbundteil 3 Bereiche unterschiedlicher Wandstärken aufweisen kann. Konkret weist das zumindest im hier gezeigten oberen Abschnitt 26 u-profilförmige Faserverbundteil 3 eine Außenwand 31 und zwei davon abragende Seitenwände 32 auf. Mit Blick auf die Figur 7 ist im rechten Übergangsbereich zwischen der Außenwand 31 und der rechten Seitenwand 32 eine gelenkartige Materialschwächung in Form einer Materialverjüngung 33 mit der Wandstärke d ausgebildet. Durch diese gezielte Schwächung des Faserverbundteils 3 in dem Übergangsbereich von der Außenwand 31 zur Seitenwand 32 kann das Federverhalten der B-Säule 1 bei einer von außen auf die B-Säule 1 einwirkenden Kraft getrimmt werden. Auf diese Weise kann das Crashverhalten der B-Säule 1 verändert werden, bei dem die Außenwand 31 des Faserverbundteils 3 in Richtung des dahinterliegenden Blechformteils 2 gedrückt wird, wobei die Seitenwände 32 der Außenwand 31 nachgeben können, indem sie sich relativ zum Blechformteil 2 in Richtung der Pfeile 34 aufstellen. Die Materialschwächung kann bei beispielsweise durch das Aufbringen einer geringen Anzahl an Laminatschichten im Vergleich zu den angrenzenden Abschnitten des Faserverbundteils 3 gestaltet werden.

Weiterhin kann das Federverhalten der B-Säule 1 auch durch Variierung des Anstellwinkels β der Seitenwände 32 gegenüber dem Blechformteil 2 angepasst werden.

Mit Blick auf die Figur 7 ist auf der linken Seite der Figur die Möglichkeit der Variierung des Federverhaltens der B-Säule 1 durch Veränderung des Anstellwinkels β gezeigt, wogegen auf der rechten Seite der Figur das Federverhalten durch Vorsehen der Materialverjüngung 33 dargestellt ist. Lediglich zur Gegenüberstellung der beiden Möglichkeiten sind diese in einer Figur dargestellt. Prinzipiell können beide Varianten miteinander kombiniert oder getrennt voneinander eingesetzt werden, wobei diese Varianten grundsätzlich auch auf beiden Übergängen ausgebildet sein können.

In Figur 8 ist eine weitere alternative Ausgestaltung der B-Säule 1 in Querschnittsansicht entlang der in Figur 1 gezeigten Schnittlinie VI-VI gezeigt. Erkennbar ist, dass zur Beeinflussung des Crashverhaltens der B-Säule 1 ein metallischer Einleger 35 in das Matrix-System des Faserverbundteils 3 eingebunden ist. Der Verstärkungseinleger 35 kann, je nach kundenspezifischer Anforderung an das Crashverhalten, aus einem kaltoder warmumgeformten hoch- oder höchstfestem Stahl hergestellt sein. Weiterhin kann der Verstärkungseinleger 35 in Längsrichtung X eine variable Wandstärke aufweisen. In dem in Figur 8 gezeigten Querschnitt ist erkennbar, dass der Verstärkungseinleger 35 hier ein etwa U-förmiges, respektive tellerförmiges Profil aufweisen kann. Grundsätzlich kann der Verstärkungseinleger 35 aber auch zum einen schmaler, insbesondere streifenförmig, oder zum anderen deutlich breiter ausgestaltet sein, sodass sich der Verstärkungseinleger 35 deutlich tiefer in die Seitenwände 32 erstrecken kann.

In Figur 9 ist erkennbar, dass der Verstärkungseinleger 35 durch Einflechten von Fasersträngen des Faserverbundteils 3 formschlüssig, respektive tragend, in die Legestruktur der umliegenden Fasermaterialien des Faserverbundteils 3 eingebunden sein kann. Dabei kann der Verstärkungseinleger 35 aufgrund seiner Oberflächenbeschaffenheit, respektive Rauigkeit und/oder eines abgestimmten Oberflächen-Beschichtungskonzeptes zu einer die Fasern des Faserverbundmaterials umgebenden Matrix tragfähig eingebunden sein.

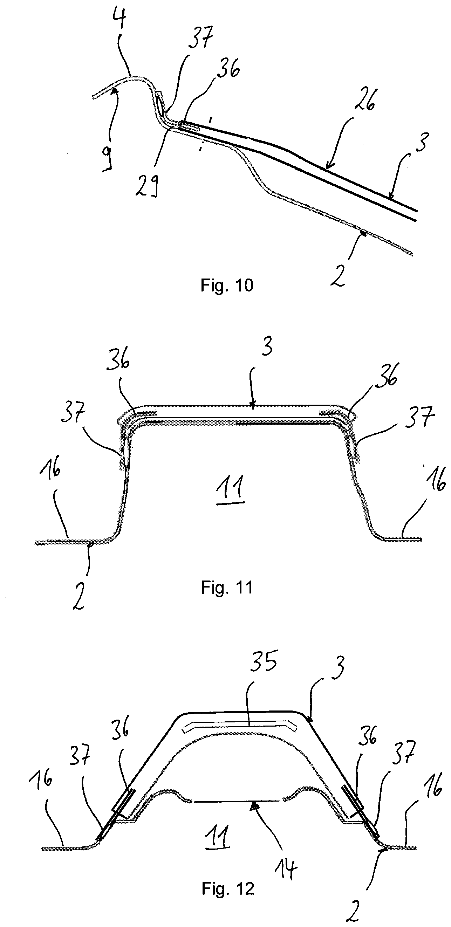

In den Figuren 10 bis 12 ist eine B-Säule 1 gemäß einer weiteren Ausführungsform der vorliegenden Erfindung dargestellt. Diese Ausführungsform unterscheidet sich lediglich von den vorbeschriebenen Ausführungsformen gemäß den Figuren 1 bis 9 dadurch, dass zur Verbindung des Faserverbundteils 3 mit dem Blechformteil 2 zusätzliche metallische Verbindungselemente 36 vorgesehen sind. Somit finden die Ausführungen zu den Ausgestaltungen gemäß den Figuren 1 bis 9 auch für die weitere Ausführungsform gemäß den Figuren 10 bis 12 Anwendung.

In Figur 10 ist die B-Säule 1 im Querschnitt entlang der in Figur 1 gezeigten Schnittlinie III-III gezeigt. Zur zusätzlichen Verstärkung der Verbindung zwischen dem Faserverbundteil 3 und dem Blechformteil 2 ist in dem Faser-Matrix-Gefüge des Faserverbundteils 3 ein metallisches Verbindungselement 36 eingebunden. In der Figur 10 ist erkennbar, dass das Verbindungselement 36 teilweise im Faserverbund des Faserverbundteils 3 eingebunden ist und mit freien Endbereichen 37 aus dem Faserverbund herausragt. An dem freien Endbereich 37 ist das Faserverbundteil 3 mit dem Blechformteil 2 stoffschlüssig verbunden, insbesondere verschweißt. Dabei kann das Verbindungselement 36 eine Vielzahl schmaler, stegartiger Füße mit jeweils einem freien Endbereich 37 oder einen sich in Querrichtung erstreckenden Flansch aufweisen. Ebenso können mehrere der Verbindungselemente 36 vorgesehen sein, um an mehreren Stellen das Faserverbundteil 3 mit dem Blechformteil 2 zu verbinden. Als Schweißverfahren eignet sich insbesondere das Punkt- oder Laser-Schweißverfahren. Für eine besonders gute Abstützung und Verbindung des Faserverbundteils 3 mit der Außenseite 4 des Kopfabschnitts 5 des Blechformteils 2 kann das Verbindungselement 36 gebogen sein, um, wie in der Figur 10 dargestellt, der Außenkontur des flanschartigen oberen Anbindungsbereiches 9 zu folgen. Weiterhin kann die Verbindung des Blechformteils 2 mit dem Faserverbundteil 3 im Kopfabschnitt 5 auch mittels einer Nietverbindung, wie in Figur 3 mit dem Niet 28 gezeigt, verstärkt sein.

In den Figuren 11 und 12 sind weitere Querschnitte der in Figur 10 gezeigten B-Säule 1 dargestellt, nämlich in der Figur 11 entlang der in Figur 1 gezeigten Schnittlinie XI-XI und in Figur 12 entlang der in Figur 1 gezeigten Schnittlinie VI-VI. Erkennbar ist, dass das Faserverbundteil 3 auch in diesen Bereichen mittels der Verbindungselemente 36 mit dem Blechformteil 2 verbunden sein kann. Die in den Figuren 10 bis 12 gezeigten Schnitte sind exemplarisch dafür, dass das Faserverbundteil 3 über die gesamte Länge hinweg durchgehend oder unterbrochen mittels der Verbindungselemente 36 mit dem Blechformteil 2 verbunden, insbesondere verschweißt sein kann.

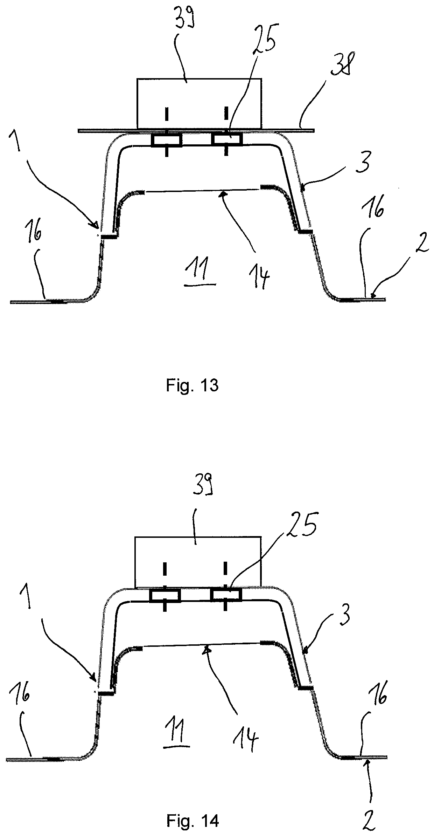

In Figur 13 ist eine Kraftfahrzeugkarosserie gemäß einer ersten Ausführungsform der vorliegenden Erfindung mit der in den Figuren 1 bis 6 gezeigten und vorbeschriebenen B-Säule 1 dargestellt. In vereinfachter Weise ist gezeigt, dass im eingebauten Zustand eine Fahrzeugaußenhaut 38 auf dem Faserverbundteil 3 flächig aufliegen kann. Die Fahrzeugaußenhaut 38 kann mittels der Befestigungsmittel 25, die zum Anbringen der Fahrzeuganbauteile, wie beispielsweise ein Schließkeil 39 für die Vordertüre, ein Türschloss, ein Türscharnier oder ein hinterer Türfeststeller, an der B-Säule 1 dienen, mit dem Faserverbundteil 3 der B-Säule 1 verbunden sein. Weiterhin kann die Fahrzeugaußenhaut 38 in nicht gezeigter Weise mit den Fügeflanschen 16 des Blechformteils 2 verbunden sein.

In Figur 14 ist eine Kraftfahrzeugkarosserie gemäß einer zweiten Ausführungsform der vorliegenden Erfindung mit der in den Figuren 1 bis 6 gezeigten und vorbeschriebenen B-Säule 1 dargestellt. Im Unterschied zu der Kraftfahrzeugkarosserie gemäß der Figur 13 wird die B-Säule 1 in der Ausführungsform gemäß der Figur 14 nicht durch eine Fahrzeugaußenhaut 38 überdeckt. Somit ist das Faserverbundteil 3 selbst im eingebauten Zustand der B-Säule 1 stets sichtbar. Ein Führer des Kraftfahrzeuges, respektive die Beifahrer werden somit beim Öffnen einer Fahrzeugtüre visuell wahrnehmen, dass das tragende Strukturelement der B-Säule 1 in Form des Faserverbundteils 3 aus einem faserverstärktem Kunststoffmaterial hergestellt ist.

### Bezugszeichenliste

- 1: B-Säule
- 2: Blechformteil
- 3: Faserverbundteil
- 4: Außenseite
- 5: Kopfabschnitt
- 6: Zentralabschnitt
- 7: Fußabschnitt
- 8: Innenseite
- 9: oberer Anbindungsbereich
- 10: Stützbereich
- 11: Hohlraum
- 12: Durchgangsöffnung
- 13: mittlerer Schenkel
- 14: Aussparung
- 15: unterer Anbindungsbereich
- 16: Fügeflansch
- 17: Außenkante
- 18: Außenkante
- 19: unterer Abschnitt
- 20: hochfester Abschnitt
- 21: mittlerer Abschnitt
- 22: Niete
- 23: Seitenwand
- 24: Schulter
- 25: Befestigungsmittel
- 26: oberer Abschnitt
- 27: Anlagebereich
- 28: Verbindungsmittel
- 29: Spalt
- 30: Entkopplungsschicht
- 31: Außenwand
- 32: Seitenwand
- 33: Materialverjüngung
- 34: Pfeil
- 35: Verstärkungseinleger
- 36: Verbindungselement
- 37: freier Endbereich
- 38: Fahrzeugaußenhaut
- 39: Schließkeil

- α: Winkel
- β: Winkel
- d: Wandstärke
- L: Länge
- X: Längsrichtung

## Patentansprüche

1. B-Säule für eine Kraftfahrzeugkarosserie, umfassend
ein Blechformteil (2) mit einem Kopfabschnitt (5), einem Zentralabschnitt (6) und einem Fußabschnitt (7), sowie mit einer Innenseite (8) und einer Außenseite (4),
wobei der Kopfabschnitt (5) an der Innenseite (8) einen Anbindungsbereich (9) zur Anbindung der B-Säule (1) an einen Dachbereich der Kraftfahrzeugkarosserie aufweist,
wobei der Fußabschnitt (7) zur Anbindung der B-Säule (1) an einen Schwellerbereich der Kraftfahrzeugkarosserie ausgestaltet ist,
wobei der Zentralabschnitt (6) sich zwischen dem Kopfabschnitt (5) und dem Fußabschnitt (7) erstreckt und eine Längsrichtung (X) der B-Säule (1) definiert,
wobei das Blechformteil (2) zumindest im Zentralabschnitt (6) ein Hutprofil derart aufweist, dass auf der Innenseite (8) ein Hohlraum (11) zur Aufnahme von Fahrzeuganbauteilen gebildet ist; und
ein Faserverbundteil (3) mit einem oberen Abschnitt (26), einem mittleren Abschnitt (21) und einem unteren Abschnitt (19),
wobei der untere Abschnitt (19) innerhalb des Zentralabschnitts (6) des Blechformteils (2) endet, **dadurch gekennzeichnet,**
**dass** das Faserverbundteil (3) von außen auf die Außenseite (4) des Blechformteils (2) aufgesetzt ist, und dass der Kopfabschnitt (5) des Blechformteils (2) an der Außenseite (4) einen Stützbereich (10) aufweist, wobei der obere Abschnitt (26) des Faserverbundteils (3) einen Anlagebereich (27) aufweist, der den Stützbereich (10) seitlich umgreift und gegen diesen in Längsrichtung (X) der B-Säule (1) abgestützt ist.

2. B-Säule nach Anspruch 1, **dadurch gekennzeichnet,**
**dass** der Stützbereich (10) keilförmig ausgebildet ist, und dass der Anlagebereich (27) nach oben hin aufgeweitet ausgebildet ist.

3. B-Säule nach Anspruch 1 oder 2, **dadurch gekennzeichnet,**
**dass** das Faserverbundteil (3) im Anlagebereich (27) mittels Verbindungsmittel (28), insbesondere Niete, mit dem Stützbereich (10) des Blechformteils (2) verbunden ist.

4. B-Säule nach einem der vorherigen Ansprüche, **dadurch gekennzeichnet,**
**dass** das Faserverbundteil (3) zumindest im mittleren Abschnitt (21) ein schalenförmiges Profil aufweist, wobei das Faserverbundteil (3) das Hutprofil des Blechformteils (2) seitlich umgreift.

5. B-Säule nach einem der vorherigen Ansprüche, **dadurch gekennzeichnet,**
**dass** das Faserverbundteil (3) metallische Verbindungselemente (36) aufweist, die teilweise im Faserverbund eingebunden sind und mit freien Endbereichen (37) aus dem Faserverbund herausragen, wobei die freien Endbereiche (37) mit dem Blechformteil (2) stoffschlüssig verbunden sind.

6. B-Säule nach einem der vorherigen Ansprüche, **dadurch gekennzeichnet,**
**dass** das Faserverbundteil (3) einen im Faserverbund eingebundenen Verstärkungseinleger (35) aufweist.

7. B-Säule nach einem der vorherigen Ansprüche, **dadurch gekennzeichnet,**
**dass** das Faserverbundteil (3) zumindest im unteren Abschnitt (19) formschlüssig am Blechformteil (2) derart anliegt, dass das Faserverbundteil (3) gegen das Blechformteil (2) in Längsrichtung (X) abgestützt ist.

8. B-Säule nach einem der vorherigen Ansprüche, **dadurch gekennzeichnet,**
**dass** das Blechformteil (2) im oberen Bereich des Fußabschnittes (7) und/oder im unteren Endbereich des Zentralabschnittes (6) einen gehärteten hochfesten Abschnitt (20) aufweist.

9. B-Säule nach einem der vorherigen Ansprüche, **dadurch gekennzeichnet,**
**dass** das Blechformteil (2) ein warmumgeformtes und zumindest teilweise gehärtetes Blechteil ist.

10. B-Säule nach einem der vorherigen Ansprüche, **dadurch gekennzeichnet,**
**dass** eine Außenkante (17) des Faserverbundteiles (3) von einer Außenkante (18) des Blechformteils (2) derart beabstandet ist, dass das Blechformteil (2) zwischen der Außenkante (17) des Faserverbundteiles (3) und der Außenkante (18) des Blechformteils (2) einen einlagigen Fügeflansch (16) der B-Säule (1) zur Verbindung einer Türdichtung und/oder einer Fahrzeugaußenhaut (38) und/oder einer Glasfläche mit dem Blechformteil (2) bildet.

11. B-Säule nach einem der vorherigen Ansprüche, **dadurch gekennzeichnet,**
**dass** das Blechformteil (2) zwei einander gegenüberliegende Seitenwände (23) aufweist, wobei das Faserverbundteil (3) auf äußeren Schultern (24) der Seitenwände (23) aufsitzt.

12. B-Säule nach einem der vorherigen Ansprüche, **dadurch gekennzeichnet,**
**dass** die Länge (Ls) des Kopfabschnittes (5) kleiner als oder gleich 15 % der Länge (L₂) des Blechformteils (2) ist, und/oder dass die Länge (L₇) des Fußabschnittes (7) kleiner als oder gleich 25 % der Länge (L₂) des Blechformteils (2) ist.

13. B-Säule nach einem der vorherigen Ansprüche, **dadurch gekennzeichnet,**
**dass** die Länge (L₃) des Faserverbundteiles (3) zwischen 50 % und 90 % der Länge (L₂) des Blechformteils (2) ist.

14. Kraftfahrzeugkarosserie, umfassend
eine B-Säule (1) nach einem der vorherigen Ansprüche, wobei das Faserverbundteil (3) der B-Säule (1) von außen sichtbar ist.

## Claims

1. B-pillar for a motor vehicle body, comprising
a sheet metal formed part (2) having a head portion (5), a central portion (6) and a base portion (7), as well as having an inner side (8) and an outer side (4),
wherein the head portion (5) comprises on the inner side (8) a connecting region (9) for connecting the B-pillar to a roof region of the motor vehicle body,
wherein the base portion (7) is configured to connect the B-pillar (1) to a sill region of the motor vehicle body,
wherein the central portion (6) extends between the head portion (5) and the base portion (7) and defines a longitudinal direction (X) of the B-pillar (1), wherein the sheet metal formed part (2) comprises at least in the central portion (6) a hat profile such that on the inner side (8) a hollow chamber (11) for receiving vehicle attaching parts is formed; and
a fibre composite part (3) having an upper portion (26), a central portion (21) and a lower portion (19),
wherein the lower portion (19) ends within the central portion (6) of the sheet metal formed part (2), **characterised in**
**that** the fibre composite part (3) is attached from outside to the outer side (4) of the sheet metal formed part (2), and that the head portion (5) of the sheet metal formed part (2) comprises a supporting region (10) at the outer side (4), wherein the upper portion (26) of the fibre composite part (3) comprises a contact region (27) that laterally embraces the supporting region (10) and is supported against this in the longitudinal direction (X) of the B-pillar (1).

2. B-pillar according to claim 1, **characterised in**
**that** the supporting region (10) is wedge-shaped, and that the contact region (27) is widened upwards.

3. B-pillar according to claim 1 or 2, **characterised in**
**that** the fibre composite part (3) is connected to the supporting region (10) of the sheet metal formed part (2) in the contact region (27) by connecting means, in particular by rivets (28).

4. B-pillar according to any one of the preceding claims, **characterised in**
**that** the fibre composite part (3) comprises a cupped profile at least in the central portion (21), wherein the fibre composite part (3) laterally embraces the hat profile of the sheet metal formed part (2).

5. B-pillar according to any one of the preceding claims, **characterised in**
**that** the fibre composite part (3) comprises metallic connecting elements (36) that are partly embedded in the fibre composite and project from the fibre composite free end regions (37), wherein the free end regions (37) are connected in a material fit to the sheet metal formed part (2).

6. B-pillar according to any one of the preceding claims, **characterised in**
**that** the fibre composite part (3) comprises a reinforcing insert (35) embedded in the fibre composite.

7. B-pillar according to any one of the preceding claims, **characterised in**
**that** the fibre composite part (3) rests on the sheet metal formed part (2) at least in the lower portion (19) such that the fibre composite part (3) is supported against the sheet metal formed part (2) in the longitudinal direction (X).

8. B-pillar according to any one of the preceding claims, **characterised in**
**that** the plate metal formed part (2) comprises in an upper region of the base portion (7) and/or in a lower end region of the central portion (6) a hardened high-strength portion (20).

9. B-pillar according to any one of the preceding claims, **characterised in**
**that** the sheet metal formed part (2) is a hot-formed and at least partially hardened sheet metal part.

10. B-pillar according to any one of the preceding claims, **characterised in**
**that** an outer edge (17) of the fibre composite part (3) is spaced from an outer edge (18) of the sheet metal formed part (2) such that the formed sheet metal part (2) forms between the outer edge (17) of the fibre composite part (3) and the outer edge (18) of the formed sheet metal part (2) a single-layer joining flange (16) of the B-pillar for connecting a door seal and/or an outer vehicle skin and/or a glass surface to the sheet metal formed part (2).

11. B-pillar according to any one of the preceding claims, **characterised in**
**that** the sheet metal formed part (2) comprises two opposed side walls (23), wherein the fibre composite part (3) is positioned on outer shoulders (24) of the side walls (23).

12. B-pillar according to any one of the preceding claims, **characterised in**
**that** the length (L₅) of the head portion (5) is smaller than or equal to 15% of the length (L₂) of the sheet metal formed part (2), and/or that the length (L₇) of the base portion (7) is smaller than or equal to 25% of the length (L₂) of the sheet metal formed part (2).

13. B-pillar according to any one of the preceding claims, **characterised in**
**that** the length (L₃) of the fibre composite part (3) is between 50% and 90% of the length (L₂) of the sheet metal formed part (2).

14. A motor vehicle body, comprising
a B-pillar (1) according to any one of the preceding claims, wherein the fibre composite part (3) of the B-pillar is visible from the outside.

## Revendications

1. Pied-milieu pour une carrosserie de véhicule automobile, comprenant
une pièce moulée en tôle (2) pourvue d'une partie haute (5), d'une partie centrale (6) et d'une partie basse (7), ainsi que d'une face intérieure (8) et d'une face extérieure (4),
la partie haute (5) comportant sur la face intérieure (8) une zone de liaison (9) pour relier le pied-milieu (1) sur une zone de toit de la carrosserie de véhicule automobile,
pour relier le pied-milieu (1), la partie basse (7) étant conçue sur une zone de seuil de la carrosserie de véhicule automobile,
la partie centrale (6) s'étendant entre la partie haute (5) et la partie basse (7) et définissant une direction longitudinale (X) du pied-milieu (1), la pièce moulée en tôle (2) comportant au moins dans la partie centrale (6) un profil en chapeau, de telle sorte que sur la face intérieure (8) soit formée une cavité (11) pour le logement d'éléments rapportés du véhicule ; et
une pièce composite en fibres (3), pourvue d'une partie supérieure (26), d'une partie médiane (21) et d'une partie inférieure (19),
la partie inférieure (19) se terminant à l'intérieur de la partie centrale (6) de la pièce moulée en tôle (2), **caractérisé en ce que**
la pièce composite en fibres (3) est montée par l'extérieur sur la face extérieure (4) de la pièce moulée en tôle (2), et **en ce que** la partie haute (5) de la pièce moulée en tôle (2) comporte sur la face extérieure (4) une zone de soutien (10), la partie supérieure (26) de la pièce composite en fibres (3) comportant une zone d'appui (27) qui entoure latéralement la zone de soutien (10) et qui est soutenue contre celle-ci dans la direction longitudinale (X) du pied-milieu (1).

2. Pied-milieu selon la revendication 1, **caractérisé en ce que**
la zone de soutien (10) est conçue en étant cunéiforme et **en ce que** la zone d'appui (27) est conçue en s'élargissant en direction du haut.

3. Pied-milieu selon la revendication 1 ou 2, **caractérisé en ce que**
dans la zone d'appui (27), la pièce composite en fibres (3) est assemblée à l'aide de moyens d'assemblage (28), notamment des rivets, avec la zone de soutien (10) de la pièce moulée en tôle (2).

4. Pied-milieu selon l'une quelconque des revendications précédentes, **caractérisé en ce que** la pièce composite en fibres (3) comporte au moins dans la partie médiane (21) un profil en forme de coque, la pièce composite en fibres (3) entourant latéralement le profil en chapeau de la pièce moulée en tôle (2).

5. Pied-milieu selon l'une quelconque des revendications précédentes, **caractérisé en ce que** la pièce composite en fibres (3) comporte des éléments d'assemblage (36) métalliques, qui sont partiellement incorporés dans le composite en fibres et qui par des zones d'extrémité (37) libres, saillissent hors du composite en fibres, les zones d'extrémité (37) libres étant assemblées par matière avec la pièce moulée en tôle (2).

6. Pied-milieu selon l'une quelconque des revendications précédentes, **caractérisé en ce que** la pièce composite en fibres (3) comporte un insert de renfort (35) incorporé dans le composite en fibres.

7. Pied-milieu selon l'une quelconque des revendications précédentes, **caractérisé en ce qu'**au moins dans la partie inférieure (19), la pièce composite en fibres (3) s'appuie par complémentarité de forme sur la pièce moulée en tôle (2), de telle sorte que la pièce composite en fibres (3) soit soutenue contre la pièce moulée en tôle (2) dans la direction longitudinale (X).

8. Pied-milieu selon l'une quelconque des revendications précédentes, **caractérisé en ce que** dans la zone supérieure de la partie basse (7) et/ou dans la zone inférieure de la partie centrale (6), la pièce moulée en tôle (2) comporte une partie (20) trempée ultra-solide.

9. Pied-milieu selon l'une quelconque des revendications précédentes, **caractérisé en ce que** la pièce moulée en tôle (2) est une pièce en tôle emboutie à chaud et au moins partiellement trempée.

10. Pied-milieu selon l'une quelconque des revendications précédentes, **caractérisé en ce qu'**une arête extérieure (17) de la pièce composite en fibres (3) est écartée d'une arête extérieure (18) de la pièce moulée en tôle (2) de telle sorte que la pièce moulée en tôle (2) forme entre l'arête extérieure (17) de la pièce composite en fibres (3) et l'arête extérieure (18) de la pièce moulée en tôle (2) une bride d'assemblage (16) monocouche du pied-milieu (1), destinée à assembler un joint de portière et/ou un revêtement extérieur du véhicule (38) et/ou une surface vitrée avec la pièce moulée en tôle (2).

11. Pied-milieu selon l'une quelconque des revendications précédentes, **caractérisé en ce que** la pièce moulée en tôle (2) comporte deux parois latérales (23) mutuellement opposées, la pièce composite en fibres (3) reposant sur des épaulements (24) extérieurs des parois latérales (23).

12. Pied-milieu selon l'une quelconque des revendications précédentes, **caractérisé en ce que** la longueur (L₅) de la partie haute (5) est inférieure ou égale à 15 % de la longueur (L₂) de la pièce moulée en tôle (2), et/ou **en ce que** la longueur (L₇) de la partie basse (7) est inférieure ou égale à 25 % de la longueur (L₂) de la pièce moulée en tôle (2).

13. Pied-milieu selon l'une quelconque des revendications précédentes, **caractérisé en ce que** la longueur (L₃) de la pièce composite en fibres (3) se situe entre 50 % et 90 % de la longueur (L₂) de la pièce moulée en tôle (2).

14. Carrosserie de véhicule automobile, comprenant un pied-milieu (1) selon l'une quelconque des revendications précédentes, la pièce composite en fibres (3) du pied-milieu (1) étant visible de l'extérieur.
